(19) Europäisches Patentamt / European Patent Office / Office européen des brevets

(11) **EP 2 028 622 A2**

(12) **DEMANDE DE BREVET EUROPEEN**

(43) Date de publication:
**25.02.2009 Bulletin 2009/09**

(51) Int Cl.:
**G06T 11/20** *(2006.01)*    *G06F 17/30* *(2006.01)*
**G06T 17/40** *(2006.01)*

(21) Numéro de dépôt: **08171707.6**

(22) Date de dépôt: **26.08.2005**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.09.2004 FR 0409296**

(62) Numéro(s) de document de la (des) demande(s) initiale(s) en application de l'article 76 CBE:
**05798372.8 / 1 784 786**

(71) Demandeur: **Newscape Technology
22300 Lannion (FR)**

(72) Inventeur: **Rey, Alain
75014 Paris (FR)**

(74) Mandataire: **Cabinet Plasseraud
52, rue de la Victoire
75440 Paris Cedex 09 (FR)**

Remarques:
Cette demande a été déposée le 15-12-2008 comme demande divisionnaire de la demande mentionnée sous le code INID 62.

(54) **Edition de grahiques vectoriels, notamment de cartes géographiques**

(57) Pour traiter par simplification/reconstruction une image comportant des zones délimitées par des lignes polygonales dont les points définissant ces lignes sont initialement stockées en mémoire,
- on organise dans une base de données (SER) hiérarchisée des jeux de points restants de chaque ligne polygonale après différentes simplifications de l'image initiale avec différents coefficients de simplification respectifs, en fonction d'un identifiant de coefficient de simplification, et,
- pour un traitement de reconstruction (33), on fait appel à un identifiant de coefficient de simplification choisi, pour récupérer de la base de données des points permettant la reconstruction de l'image au coefficient de simplification choisi.

FIG. 3b
(INVENTION)

## Description

La présente invention concerne un traitement de données d'image numérique sous forme de graphique vectoriel, en particulier par simplification/reconstruction d'une image comportant des zones délimitées par des lignes polygonales, telle qu'une carte géographique.

Le traitement de simplification/reconstruction, dont un exemple est décrit en détail plus loin, est utilisé notamment dans l'application d'un zoom arrière/avant, respectivement, à une image sous forme de graphique vectoriel.

Une application préférentielle mais aucunement limitative vise le téléchargement de telles données d'image, telle qu'une carte géographique, sur un terminal, notamment mobile, à partir d'un serveur local ou distant et via un réseau de télécommunication.

Notamment dans ce contexte, il est souhaité qu'un utilisateur du terminal puisse, d'une part, télécharger les données d'image sur son terminal et, d'autre part, naviguer dans l'image, le plus rapidement possible. On entend par *"naviguer dans l'image"* typiquement le fait d'effectuer des zooms avant ou arrière sur une carte géographique, ou encore appliquer des déplacements *"latéraux"* dans la carte, dits en vocable anglo-saxon *"drag and drop",* c'est-à-dire des déplacements dans le plan de la carte et à facteur d'échelle constant.

Toutefois, lorsque le terminal édite une première image et que l'utilisateur souhaite éditer une seconde image, correspondant par exemple à un zoom de la première image, le terminal se reconnecte au serveur pour télécharger systématiquement toutes les données d'image de la seconde image. D'une part, cette mesure grève les temps d'attente de téléchargement et, finalement, les coûts de télécommunication. D'autre part, elle limite considérablement le caractère interactif des échanges avec le serveur.

La présente invention vient améliorer la situation.

Elle propose à cet effet un traitement de données d'image numérique sous forme de graphique vectoriel, dans lequel pour traiter par simplification/reconstruction d'une image comportant des zones délimitées par des lignes polygonales :

> a) pour toutes les lignes polygonales, on stocke en mémoire les points définissant lesdites lignes polygonales,
>
> b) on organise une base de données en mémorisant sous forme hiérarchisée, en fonction d'un identifiant de coefficient de simplification, les points restants de chaque ligne polygonale après différentes simplifications de l'image initiale avec différents coefficients de simplification respectifs,
>
> c) et, pour un traitement de reconstruction, on fait appel à un identifiant de coefficient de simplification choisi, pour récupérer de ladite base de données des points permettant la reconstruction de l'image audit coefficient de simplification choisi.

Ces étapes sont préférentiellement menées auprès d'un serveur apte à coopérer avec un terminal dans un réseau du type précité. Dans ce contexte, on télécharge les données d'image d'un serveur vers un terminal, et :

- la base de données précitée est constituée auprès du serveur,
- les points précités résultant d'une simplification sont téléchargés du serveur selon une requête du terminal comprenant un identifiant de coefficient de simplification, et
- le terminal construit et édite une image simplifiée selon le coefficient de simplification identifié.

La présente invention vise aussi l'application du procédé au sens de l'invention à l'édition de cartes géographiques sous forme de graphiques vectoriels.

La présente invention vise aussi un système pour la mise en oeuvre du procédé, ce système comportant un terminal et un serveur reliés par un réseau de télécommunication, pour l'édition de graphiques vectoriels sur le terminal.

La présente invention vise aussi un serveur d'un tel système, ainsi qu'un terminal d'un tel système.

La présente invention vise encore un produit programme d'ordinateur destiné à être stocké dans une mémoire d'un serveur d'un tel système, et comportant des instructions pour :

- lire des données de points d'une image vectorielle,
- déterminer des frontières communes entre zones de ladite image, sous forme de lignes polygonales, et
- lancer toutes ou partie des étapes du procédé selon l'invention.

La présente invention vise aussi la structure de données de la base de données précitée pour la mise en oeuvre du procédé selon l'invention.

La présente invention vise aussi un produit programme d'ordinateur destiné à être stocké dans une mémoire d'un terminal d'un réseau de télécommunication, et comportant des instructions pour :

- lire des données présentant la structure de données précitée, et
- éditer, à partir de ces données, une image sur un écran d'affichage que comporte le terminal.

D'autres avantages et caractéristiques de l'invention apparaîtront à la lecture de la description détaillée ci-après et des dessins annexés sur lesquels :

- les figures 1a et 1b représentent respectivement une carte géographique et un zoom avant mené sur cette carte,

- les figures 2a à 2d représentent schématiquement une ligne polygonale à simplifier, à différentes étapes de traitement de simplification selon l'algorithme dit "de *Douglas-Peucker"*,
- les figures 3a et 3b représentent schématiquement les échanges entre un terminal et un serveur, respectivement selon l'art antérieur et selon l'invention,
- les figures 4a à 4d représentent schématiquement une ligne polygonale à différents degrés de simplification croissants et les figures 4e à 4g illustrent les points complémentaires des simplifications successives respectives,
- la figure 5 représente un tableau des indices des points retenus (première colonne), exclus (seconde colonne), et complémentaires (troisième colonne), après chaque simplification des figures 4a à 4d,
- les figures 6a, 6b et 6c, représentent respectivement une aberration de simplification/reconstruction, une direction donnée aux lignes polygonales selon une réalisation préférée de l'invention, et un agrandissement de la frontière commune aux objets a et c de la figure 6b,
- les figures 7a à 7d, représentent respectivement une image initiale, un zoom avant sur cette image initiale, une translation selon un déplacement *"drag and drop",* et une reconstruction locale respectant la précision à l'échelle requise.

Tout d'abord, on indique que l'invention s'applique avantageusement à la cartographie numérique, dite *"géomatique".* En aval des organisations classiques dites *"Systèmes d'Informations Géographiques",* existant depuis de nombreuses années et équipant les bureaux d'études, collectivités territoriales, syndicats des eaux, services techniques, ou autres, de nombreuses applications destinées au grand public permettent aujourd'hui la consultation de cartes, notamment par téléchargement via le réseau Internet. Ces applications se répartissent en deux grandes familles :

- les applications dites *raser",* proposant des cartes au format dit *"image"* ou *"bitmap"* et correspondant à un ensemble de pixels, et
- les applications dites *"vecteur",* qui délivrent des cartes constituées d'objets mathématiques tels que droites, segments, lignes polygonales permettant de représenter plus ou moins fidèlement les objets géographiques.

Quelle que soit la nature d'un programme géomatique, de type *"raster"* ou *"vecteur",* la compression des données est cruciale dès lors qu'elles transitent par un réseau de télécommunication dans le cadre d'une architecture client/serveur.

Les applications *"raster"* utilisent principalement la compression par ondelettes, le format GIF compressé ou encore le format JPEG. Pour les applications "vecteur", au contraire, il n'existe pas de traitement de compression, dans l'art antérieur connu de la Demanderesse.

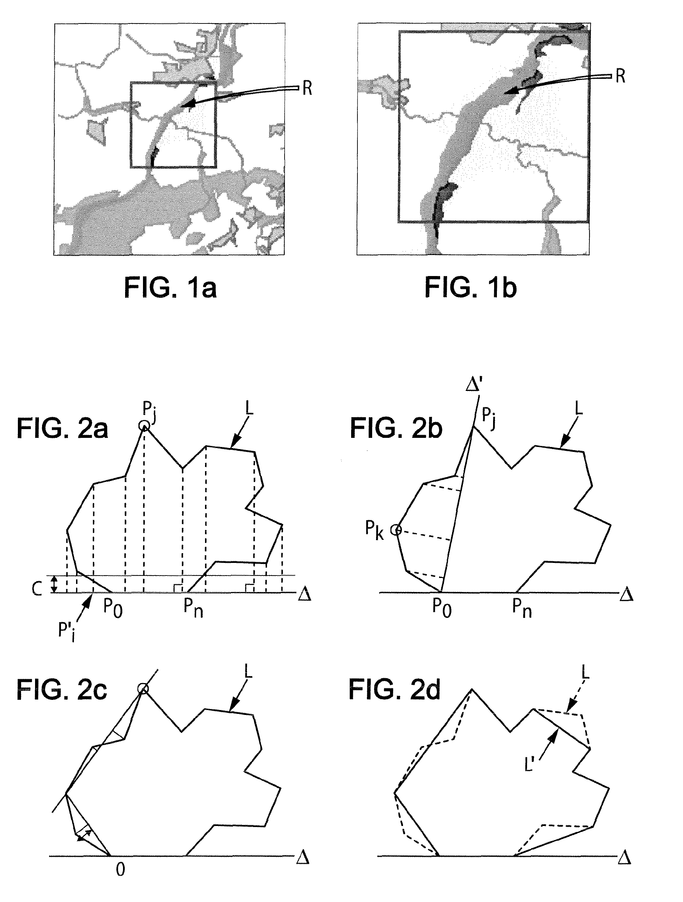

On se réfère aux figures 1a et 1b pour décrire un exemple de traitement de simplification/reconstruction. Le traitement dit de *"généralisation",* en cartographie, consiste à simplifier un tracé en fonction de l'échelle à laquelle on le représente pour le rendre plus facilement lisible par l'utilisateur, tout en essayant de conserver au mieux sa géométrie. Ainsi, au $1/50000^{ième}$, et $1/25000^{ième}$, une rivière R sera respectivement représentée par une approximation grossière de son lit (figure 1a), puis par un tracé comportant toutes les courbures qu'emprunte son trajet de la source au fleuve (figure 1b).

Ce principe de perte de précision en fonction de l'échelle est également appelé réduction polygonale dans des domaines tels que la géométrie numérique ou les images de synthèse. En l'occurrence, il s'agit alors de *"soulager"* le traitement d'un certain nombre d'informations ponctuelles jugées non pertinentes ou insuffisamment significatives sur la géométrie de l'objet traité.

A cet effet, quelques algorithmes de réduction polygonale ont été mis au point. Parmi ces traitements, on peut citer notamment les algorithmes de Hakimi-Schmeichel, de Imai-Iri, et en particulier de Douglas-Peucker qui sera décrit plus loin.

La plupart de ces algorithmes nécessite une valeur numérique arbitraire en entrée, appelée coefficient de réduction, qui détermine la perte de précision qui sera appliquée au tracé d'origine. Typiquement, plus ce coefficient est grand, plus le tracé obtenu est grossier.

Ces algorithmes peuvent être répartis en deux familles :

- ceux dont le tracé résultant passe par des points appartenant au tracé originel, et
- ceux qui génèrent des points nouveaux par rapport à l'objet initial.

L'algorithme dit *"de Douglas-Peucker"* appartient à la première famille.

On se réfère maintenant aux figures 2a à 2d pour décrire cet algorithme.

On considère une ligne polygonale L constituée de n+1 points numérotés de 0 à n et notés {P0, P1, ..., Pn}. On commence par tracer la droite Δ(P0Pn) passant par P0 et Pn et l'on calcule la distance à cette droite de tous les points restants, à savoir, P1 jusqu'à Pn-1. Pour ce faire, on calcule les projetés orthogonaux P'i de chacun de ces points sur la droite Δ. On calcule ensuite les distances entre les points Pi et P'i, pour tout i compris entre 1 et n-1. Puis, on compare chacune de ces distances à un coefficient C dit *"de réduction"* donné comme paramètre de lancement de l'algorithme. Si cette distance entre Pi et P'i est inférieure au coefficient C, le point Pi pourra être éliminé du tracé final (figure 2c).

Auparavant, on sélectionne le point Pj le plus éloigné de la droite Δ. Il s'agit du point dont la distance Dj est la plus grande (figure 2b). Ce point Pj sera conservé dans le tracé final (figure 2d). On met de côté ensuite le sous-tracé PjPn. On trace en revanche la droite Δ'(P0Pj) (figure 2b), et pour chacun des points {P1, P2, ...,Pj-1}, on recommence les étapes décrites ci-avant, qui peuvent donc se résumer comme suit :

-    calcul des projetés orthogonaux P'i sur la droite Δ',

-    comparaison des distances Pi à P'i avec le coefficient C,

-    détermination du point Pk le plus éloigné de la droite Δ', et

-    mise de côté, le cas échéant, d'un sous-tracé PkPj, à traiter ultérieurement, etc.

Typiquement, une fois que le sous-tracé P0Pj a été analysé et traité, on revient sur le sous-tracé PjPn que l'on analyse et traite, à son tour, suivant les mêmes étapes.
Finalement, à la fin du traitement, on obtient une ligne polygonale simplifiée, notée L' (figure 2d).
On notera que cet algorithme de Douglas-Peucker :

-    se termine de lui-même (par principe de récursivité),
-    produit un tracé contenant au plus n points,
-    et produit un tracé contenant au minimum deux points, P0 et Pn.

Par ailleurs, plus le coefficient de simplification C est grand, plus le nombre de points retenus diminue et plus grande est la perte de précision.
L'une des caractéristiques de cet algorithme consiste en ce que si T, T' et T" sont respectivement :

-    un tracé d'origine,
-    le tracé d'origine simplifié d'un coefficient C1, et
-    le tracé d'origine simplifié d'un coefficient C2 supérieur à C1,

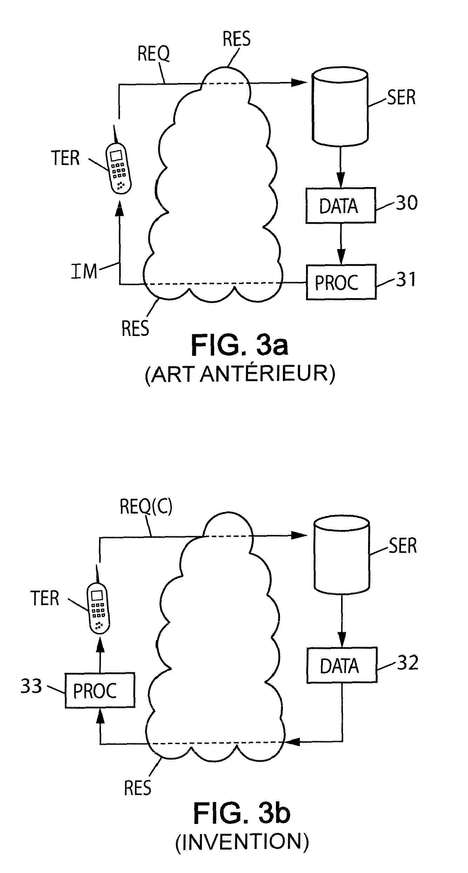

alors tous les points du tracé T" sont aussi des points du tracés de T' qui sont eux-mêmes des points de T.
Une autre caractéristique propre à tous les algorithmes de réduction précités consiste en ce que les deux extrémités d'un tracé réduit sont les deux extrémités de son tracé d'origine.
On décrit maintenant le principe inverse de la restitution de précision.
Cette technique n'a de sens que dans le cadre d'une carte "vecteur" dynamique. Par le terme *"dynamique",* on entend la possibilité de mener un zoom avant dans la carte, en temps réel. De nombreuses applications connues fonctionnent sur le principe de la requête client/ serveur à chaque demande de déplacement ou de zoom de la part du client. Les coordonnées de la carte, ainsi que la nature du mouvement (zoom ou déplacement), côté utilisateur, sont envoyées au serveur. Dans ce contexte de l'état de l'art, le serveur recalcule la carte mise à jour, puis transmet l'image obtenue au client, comme représenté sur la figure 3a.
En référence à cette figure 3a, relative à l'art antérieur, sur requête REQ du terminal TER, le serveur SER :

-    extrait, à l'étape 30, toutes les données de l'image initiale, non simplifiée,
-    calcule, à l'étape 31, par exemple une simplification de l'image car un zoom arrière aurait été requis par l'utilisateur du terminal TER, et
-    transmet les données IM ainsi traitées via le réseau de télécommunication RES.

Bien entendu, la requête REQ du terminal, comme les données d'image transmises IM, transite par le réseau de télécommunication RES.
En référence à la figure 3b, relative à l'invention, le procédé au sens de l'invention se distingue de ce type d'art antérieur notamment en ce que le terminal TER dispose de toutes les informations nécessaires au zoom et au déplacement, comme on le verra plus loin, et, plus particulièrement, est capable, à partir de séries de points qui sont fonction de coefficients de simplification successifs ordonnés dans le sens des échelles croissantes (valeurs décroissantes des coefficients de simplification), d'éditer la carte sur un écran d'affichage qu'il comporte (non représenté).
Par exemple, si l'utilisateur a requis un zoom avant, des points supplémentaires, permettant l'édition de la carte à une échelle plus grande, sont téléchargés du serveur SER (étampe 32) comme suit :

-    le passage de l'un des paliers précités provoque un appel spécifique REQ(C) vers le serveur SER,
-    le serveur SER renvoie alors les points complémentaires permettant la restitution de la précision relative à l'échelle de la carte (étape 32),
-    sur réception de ces points supplémentaires, le terminal TER intègre à la volée ces nouveaux points dans une liste existante, relative au tracé précédent (non zoomé), et remet à jour cette liste (étape 33).

On a représenté l'appel spécifique du terminal vers le serveur par le sigle REQ(C) sur la figure 3b car cette requête dépend notamment du coefficient de simplification C associé, dans la base de données du serveur SER, aux points qui sont demandés par le terminal TER pour mener par exemple un zoom avant d'une image en cours d'édition.
On indique qu'un choix de zoom de l'utilisateur (notamment de zoom avant) peut consister en plusieurs changements d'échelle successifs, d'une première échelle jusqu'à une seconde échelle à laquelle le tracé contient la totalité des points de l'image d'origine. Cette technique réduit considérablement, côté serveur, le volume des données à transmettre, ainsi que la durée d'exécution des traitements. Finalement, ces traitements se limitent à quelques envois de requêtes simples, puisqu'un programme, côté terminal, sait interpréter et traiter les données reçues.

En termes généraux, on comprendra que le serveur SER comprend donc une base de données comportant au moins :

- un premier jeu de points associés à un premier coefficient de simplification,
- et, associé à un second coefficient de simplification de valeur inférieure au premier coefficient, un second jeu de points complémentaires des points du premier jeu pour la reconstruction de l'image suivant le second coefficient de simplification.

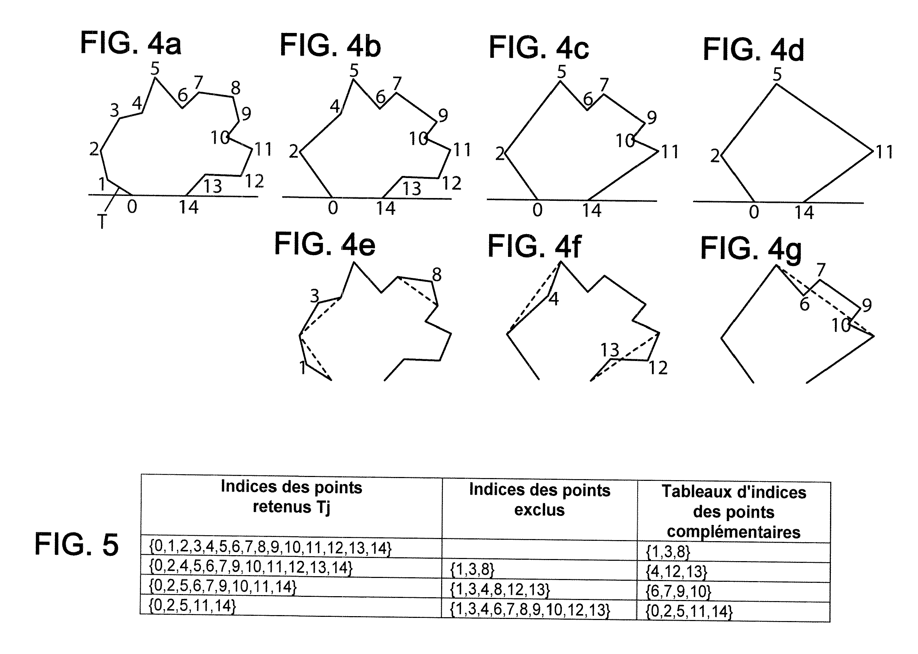

On détaille ci-après le principe du procédé objet de l'invention, en référence aux figures 4a à 4g.

Sur la figure 4a, un tracé T contient n+1 points notés {P0, P1, ..., Pn}. On réduit ce tracé suivant un coefficient C1, pour obtenir un tracé T1 contenant i+1 points notés {P'0, P'1, ... P'i}.

Ainsi :

- P0 = P'0 et P'i = Pn
- tous les points de T1 sont aussi des points de T, ou, en d'autres termes, il n'existe pas de point de T1 qui ne soit également un point de T,
- i est inférieur ou égal à n.

Pour tout point P'j du tracé T1, il existe k entre 0 et n tel que P'j = Pk. On déduit de cette propriété un tableau d'indices de points du tracé T1, noté I1. L'ensemble des points identifiés par ce tableau d'indices est strictement inclus dans l'ensemble des points définissant le tracé initial T, noté I. I1 existe donc un tableau IC1 complémentaire de I1 par rapport à I tel que IC1+I1 = I.

On peut donc construire initialement un tracé T contenant n+1 points notés P0 à Pn, et son tableau d'indices noté I = {0,1,2, ...n}, puis appliquer une suite de réductions polygonales sur ce tracé suivant des coefficients de réduction successifs Cj tels que C1<C2<...<Cj<...<Ck, pour obtenir une série de tracés réduits de T notés T1 à Tk et leurs tableaux d'indices Ik respectifs.

Ainsi, il existe une et une seule série de tableaux d'indices complémentaires ICk tels que :

$$\sum_{j=1}^{k} ICj + ICk = I$$

Dans l'exemple de la figure 4a, on a représenté un tracé T contenant 15 points, P0 à P14, et son tableau d'indices I={0,1, ...14} sur la figure 5. En appliquant trois réductions, de coefficients C1<C2<C3, on obtient trois tracés T1, T2 et T3. En se référant au tableau de la figure 5, lors de la première réduction, les points d'indice {0,2,4,5,6,7,9,10,11,12,13,14} sont retenus. Après la seconde réduction, les points {0,2,5,6,7,9,10,11,14} sont retenus. Après la troisième réduction, il reste les points {0,2,5,11,14}.

Pour passer du tracé T3 au tracé T2, il suffit donc de réinsérer les points exclus entre la réduction C3 et la réduction C2, à savoir {6,7,9,10}. Pour obtenir T1, il suffit de rajouter encore les points {4,12,13}. Enfin, pour passer de T1 à T, il suffit de rajouter les points {1,3,8}.

On décrit ci-après un traitement complémentaire prévu dans un mode de réalisation préféré de l'invention, consistant en la recherche de *"frontières communes"*.

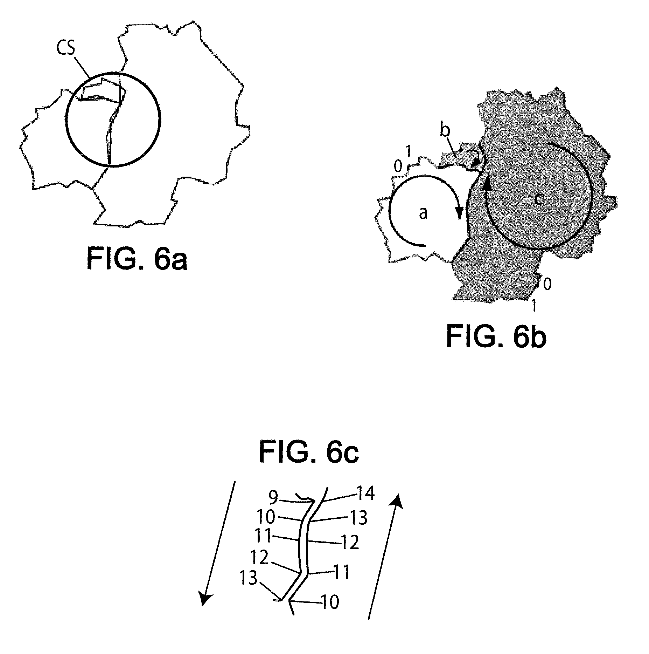

En cartographie, de nombreux objets partagent des portions communes : départements, régions, fleuves et routes, bâtis et forêts, ou autre. Or, appliquer sur un ensemble d'objets géographiques une réduction polygonale de coefficient C, indépendamment les uns des autres, conduit à une aberration CS telle que représentée à titre d'exemple sur la figure 6a, car l'algorithme de réduction conduit, pour un même coefficient, à deux tracés réduits différents suivant la position des points extrêmes des tracés.

Ce qui suit vient apporter une solution à ce problème.

Tout d'abord, une première analyse est lancée afin d'identifier les objets géographiques ayant une portion de tracé commune, appelée *"frontière commune"*. Ensuite, si ces objets sont des objets fermés, leurs bornes sont décalées en indice pour les placer aux points extrêmes des portions communes. On découpe ensuite les objets géographiques en segments. Enfin, chaque tracé peut être reconstitué en ajoutant successivement les points de ses segments constituants.

Toutefois, même si une ligne polygonale n'a pas réellement de *"direction"* au sens mathématique du terme (à la différence d'un vecteur), on affecte à la ligne polygonale une direction implicite en géométrie analytique, déterminée par la position de ses premier et deuxième points, ce qui définit des sens d'attribution d'indices aux points du tracé comme représenté en figure 6b.

Avantageusement, on tient compte du cas où deux tracés ont une frontière commune mais une direction opposée (comme représenté sur la figure 6c), sinon leur reconstitution donnerait lieu à des résultats aberrants.

Cette recherche de frontières communes est préférentiellement itérative, comme suit :

- pour un premier objet géographique en mémoire, on recherche, isole, construit et mémorise tous les segments correspondants aux portions de son tracé qui sont communes à d'autres d'objets géographiques ;
- lors de ces créations successives, on affecte, à un second objet possédant un segment commun avec le premier objet, une donnée d'information du sens de rotation des indices dans le premier objet, sous la forme d'un code correspondant à une égalité ou à une inversion du sens de rotation.

Ainsi, lorsque l'on recherche les frontières communes pour le second objet, sa liste de segment contient déjà tous ceux créés, le cas échéant, par des objets précédents dans la recherche de frontières, ainsi que les directions (ou sens de rotation précités) de ces objets par rapport à sa propre direction.

Une fois ce second objet traité, on procède ensuite au traitement des objets suivants, et ainsi de suite.

En termes généraux, le procédé selon l'invention prévoit les étapes suivantes :

- une numérotation des points successifs constituant chaque ligne polygonale de l'image initiale,

- les points de chacune de ces lignes sont stockés dans la base de données du serveur en correspondance d'un numéro d'ordre dans la ligne polygonale et d'un identifiant de la ligne polygonale à laquelle il appartient,

- si l'image initiale présente plusieurs lignes polygonales constituant des frontières communes entre zones, incluant au moins trois frontières possédant un point commun, comme représenté sur la figure 6b, l'ordre de numérotation d'une frontière est choisi préférentiellement inverse des ordres de numérotation des deux autres frontières.

On décrit maintenant quelques applications du procédé au sens de l'invention, notamment pour effectuer des opérations de zoom et de saisir/glisser (ou *"drag and trop"*).

Au lancement de l'application, chaque objet géographique est reconstitué à partir de ses segments et des points que contienent ceux-ci en fonction de l'échelle et du niveau de réduction initiaux. Ensuite, en cas de zoom, une fois qu'un palier est franchi, déclenchent un appel à la base de données pour fourniture de points complémentaires, un filtrage a lieu côté terminal. On indique que l'on ne s'intéresse ici qu'aux segments se trouvant dans la zone de visualisation sur l'écran d'affichage du terminal, afin de limiter le volume de données à recevoir et d'augmenter ainsi la fluidité de l'application interactive.

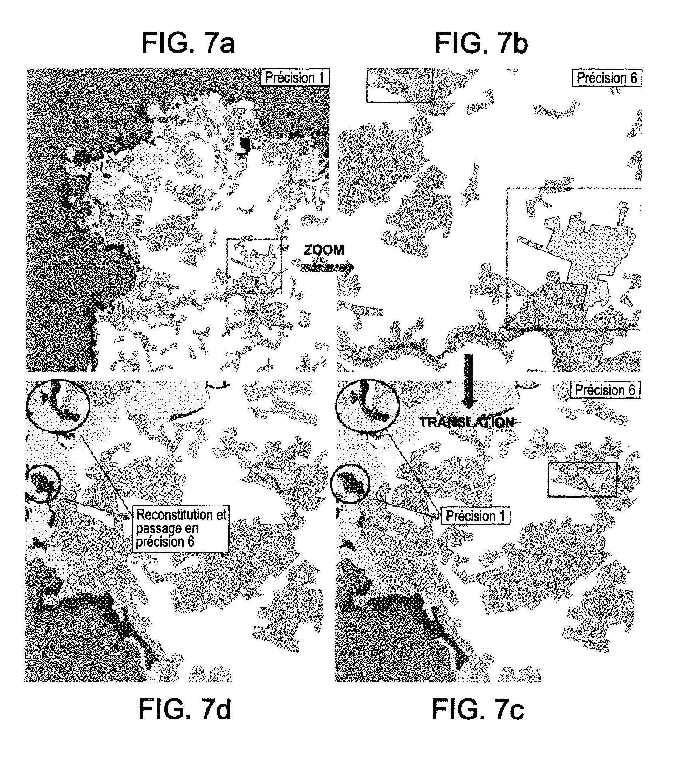

Par exemple, un utilisateur effectue un zoom dans le centre d'une carte, et franchit ainsi six paliers sur dix paliers que peut compter l'application (passage de la figure 7a à la figure 7b). Puis, il déplace la carte (*"drag and drop"*) vers la gauche (passage de la figure 7b à la figure 7c). Une partie des objets géographiques, en particulier ceux contenus dans la zone de visualisation lors du zoom, sont en précision 6, une autre partie est en précision 5, une autre en précision 4, et ainsi de suite (figure 7c). A la fin du déplacement, une requête REQ est alors envoyée au serveur pour récupérer les points complémentaires de tous les niveaux de précision manquant, et une reconstitution itérative est effectuée le cas échéant (figure 7d).

Ainsi, en termes généraux, parmi les points complémentaires précités, on sélectionne des points destinés à l'édition de l'image dans une fenêtre de dimensions prédéterminées, correspondant par exemple aux dimensions de l'écran d'affichage du terminal.

Pour résumer les étapes ci-avant, lorsque l'utilisateur du terminal envoie une requête de zoom avant au serveur :

- le terminal dispose initialement des points permettant l'édition d'une image selon un coefficient de simplification initial, dans une fenêtre de dimensions données,

- le terminal télécharge du serveur une sélection de points complémentaires permettant l'édition de l'image selon un coefficient de simplification inférieur au coefficient initial et correspondant au niveau de zoom avant requis, la sélection de ces points complémentaires étant menée pour éditer l'image ainsi agrandie dans la fenêtre précitée.

Cette sélection des points complémentaires peut, comme indiqué ci-avant, évoluer selon un choix, à l'initiative de l'utilisateur, de déplacements de l'image, dans le plan de l'image et à niveau de zoom constant.

## Revendications

1. Procédé de traitement de données d'image numérique téléchargées d'un serveur vers un terminal, sous forme de graphique vectoriel, dans lequel, pour traiter par simplification/reconstruction une image comportant des zones délimitées par des lignes polygonales :

   a) pour toutes les lignes polygonales, on stocke en mémoire les points définissant lesdites lignes polygonales,
   b) on organise une base de données (SER) constituée auprès du serveur (SER) en mémorisant sous forme hiérarchisée, en fonction d'un identifiant de coefficient de simplification, les points restants de chaque ligne polygonale après différentes simplifications de l'image initiale avec différents coefficients de simplification respectifs,
   c) et, pour un traitement de reconstruction (33), on fait appel à un identifiant de coefficient de simplification choisi, pour récupérer de ladite base de données des points permettant la reconstruction de l'image audit coefficient de simplification choisi,

   lesdits points résultant d'une simplification étant téléchargés du serveur selon une requête (REQ(C)) du terminal (TER) comprenant un identifiant de coefficient de simplification, le terminal étant apte à construire et éditer une image simplifiée selon ledit coefficient de simplification identifié, **caractérisé en ce que** la base de données comporte au moins :

- un premier jeu de points associés à un premier coefficient de simplification,
- et, associé à un second coefficient de simplification de valeur inférieure au premier coefficient, un second jeu de points complémentaires des points du premier jeu pour la reconstruction de l'image suivant ledit second coefficient de simplification,

parmi lesdits points complémentaires, des points étant sélectionnés pour l'édition de l'image dans une fenêtre de dimensions prédéterminées, et **en ce que** :

- sur requête de zoom avant émise par le terminal et reçue par le serveur, le terminal (TER) disposant initialement des points permettant l'édition d'une image selon un coefficient de simplification initial, dans une fenêtre de dimensions données, le terminal télécharge du serveur une sélection de points complémentaires permettant l'édition de l'image selon un coefficient de simplification inférieur au coefficient initial et correspondant au niveau de zoom avant requis, la sélection de ces points complémentaires étant menée pour éditer l'image ainsi agrandie dans ladite fenêtre, et
- sur requête de déplacement latéral du terminal au serveur, ladite sélection des points complémentaires évolue selon un choix, à l'initiative de l'utilisateur, de déplacements de l'image, dans le plan de l'image et à niveau de zoom constant.

**2.** Procédé selon la revendication 1, **caractérisé en ce que** la simplification/reconstruction utilise un traitement selon un algorithme dit "de *DOUGLAS-PEUCKER"*.

**3.** Application du procédé selon l'une des revendications précédentes, à l'édition de cartes géographiques sous forme de graphiques vectoriels.

**4.** Système pour la mise en oeuvre du procédé selon l'une des revendications 1 et 2, **caractérisé en ce qu'**il comporte un terminal (TER) et un serveur (SER) reliés par un réseau de télécommunication (RES), pour l'édition de graphiques vectoriels sur le terminal.

**5.** Produit programme d'ordinateur, pour un traitement selon le procédé de l'une des revendications 1 et 2, de reconstruction/simplification d'une image numérique sous forme de graphique vectoriel, le programme étant destiné à être stocké en mémoire d'un système de télécommunication incluant au moins un serveur et un terminal, **caractérisé en ce qu'**il comporte, côté serveur, des instructions pour :

a) stocker en mémoire des points définissant des lignes polygonales délimitant des zones que comporte une image, et
b) organiser une base de données (SER) en mémorisant sous forme hiérarchisée, en fonction d'un identifiant de coefficient de simplification, les points restants de chaque ligne polygonale après différentes simplifications de l'image initiale avec différents coefficients de simplification respectifs prédéterminés,

et, côté terminal, des instructions pour :

c) faire appel à ladite base de données, avec un identifiant de coefficient de simplification choisi, pour récupérer de ladite base de données des points permettant au moins l'édition de l'image audit coefficient de simplification choisi.

**FIG. 1a**

**FIG. 1b**

**FIG. 2a**

**FIG. 2b**

**FIG. 2c**

**FIG. 2d**

REQ

RES

SER

TER

DATA — 30

IM

PROC — 31

RES

## FIG. 3a
(ART ANTÉRIEUR)

REQ(C)

SER

TER

DATA — 32

33 — PROC

RES

## FIG. 3b
(INVENTION)

# FIG. 4a

# FIG. 4b

# FIG. 4c

# FIG. 4d

# FIG. 4e

# FIG. 4f

# FIG. 4g

## FIG. 5

| Indices des points retenus Tj | Indices des points exclus | Tableaux d'indices des points complémentaires |
|---|---|---|
| {0,1,2,3,4,5,6,7,8,9,10,11,12,13,14} | | {1,3,8} |
| {0,2,4,5,6,7,9,10,11,12,13,14} | {1,3,8} | {4,12,13} |
| {0,2,5,6,7,9,10,11,14} | {1,3,4,8,12,13} | {6,7,9,10} |
| {0,2,5,11,14} | {1,3,4,6,7,8,9,10,12,13} | {0,2,5,11,14} |

**FIG. 6a**

**FIG. 6b**

**FIG. 6c**

## FIG. 7a

## FIG. 7b

## FIG. 7d

## FIG. 7c